# EUROPEAN PATENT APPLICATION

(11) **EP 1 518 458 A1**
(43) Date of publication of application: **30.03.2005**
(21) Application number: 04425672.5
(22) Date of filing: 08.09.2004
(51) Int. Cl.: A01M 7/00, B05B 7/24

(54) **Fixed atomizer for pastes, powders and liquids**

(30) Priority: 09.09.2003 IT RM20030424
(71) Applicant: di Biagio, Stefania, 04019 Terracina (LT) (IT)
(72) Inventor: di Biagio, Stefania, 04019 Terracina (LT) (IT)

(57) **Abstract**

The fixed atomizer is an invention used exclusively in closed environments such as greenhouses, gyms, discotheques and other closed areas which need disinfestation or spraying.

It is called the fixed atomizer because it is positioned in a fixed spot in the area requiring spraying and from there can automatically carry out the entire spraying procedure without the presence of a technician.

The fixed atomizer is able to mix water with all kinds of substances (including medicines, venoms weedkillers, hormones, fertilizers and other) of any specific weight and consistency (pasty, powdery or liquid) and then spray any closed, environment rapidly and efficiently. The fact that it functions automatically, reduces health hazards, by eliminating exposure to harmful substances.

Particularly important is the reduction of spraying time with significant reduction in working hours, costs and also the amount of mixture (water mixed with other substances) utilized for every square metre. But, most important of all, is the fact that never before has it been possible to spray using any kind of substance, be it pasty, powdery and/or liquid, without the presence of a technician. In this way, exposure to highly toxic, health-injuring substances can be completely avoided.

## Description

### A. MOST IMPORTANT CHARACTERISTICS:

This invention's main feauture is it's capacity to mix water with any pasty, powdery or liquid substance such as medicines, venoms weedkillers, hormones, fertilizers or other, commonly used in closed environments, by means of a fixed atomizer positioned about 3 metres above the ground (either suspended or on a special platform) which once activated, automatically vaporizes and sprays the substances employed, rapidly and efficiently with significant time, cost and energy consumption reduction. Furthermore the whole spraying procedure can take place without the presence of a technician(this was not possible before) who thereby is not exposed to extremely hazardous substances. The fixed atomizer is an invention used exclusively in closed environments such as greenhouses, gyms, discotheques and other closed areas which need disinfestations or spraying.

### B. CURRENT TECHNOLOGY AND ITS SHORTCOMINGS

Actually, it is not possible to vaporize and spray powdery and pasty substances with fixed atomizers. In fact, it still must be done manually by means of:
a) shoulder atomizers; (a technician carries the atomizers on his shoulders)
b) atomizers equipped with wheels and pushed by a technician
c) atomizers connected to tractors and driven by a technician throughout the whole spraying procedure.

The drawback to this method is that the tractor's dimensions prevent spraying plantations with narrow rows (in greenhouses, for example) thereby causing considerable reduction in production.

In any case, all the above -mentioned methods of spraying require the presence of a technician with the serious problem of health-injuring exposure to highly toxic substances.

### C. DESCRIPTION OF THE INVENTION

The innovations of this invention can significantly improve on the drawbacks of the previously mentioned manual methods through the creation of an entirely new engine or precisely: a conically-shaped atomizer with a high powered fan, adequate nozzles with adjustable flow, a special mixer that allows water to be mixed with any kind of substance efficiently without the presence of a technician, a commonly used air compressor and an electric control panel.

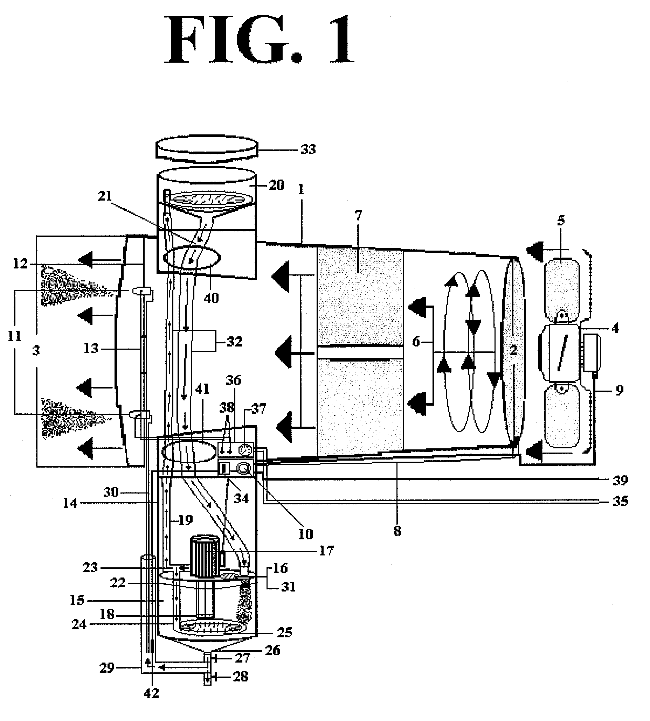

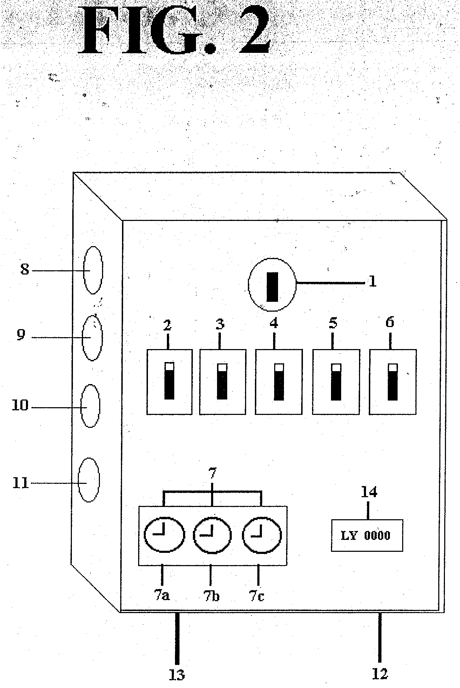

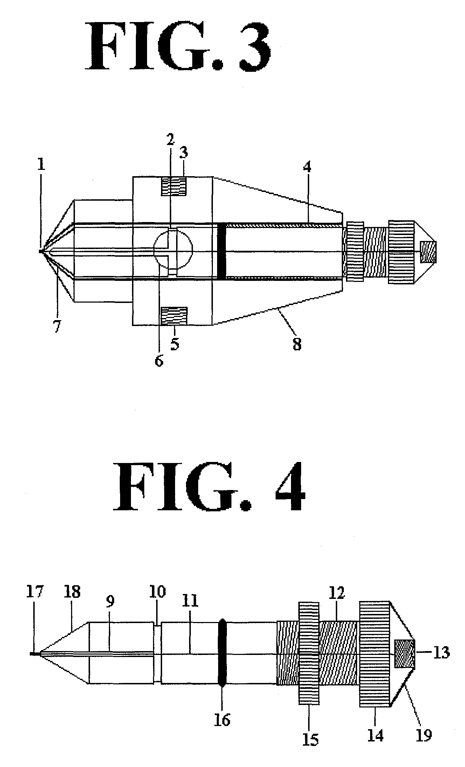

The atomizer (**Fig. 1**) is composed of a fan, equipped with conveyor, nozzles (**Fig. 3 and 4**),a frontally positioned mixer, a special electric panel (**Fig.2**) and a common air compressor.

### Analysis and description of each single component of the fixed atomizer.

### 1) THE ATOMIZER

Figure 1 shows the atomizer

The fixed atomizer is made up of a conically shaped conveyor. The measurements of the conveyor's ends (where the air comes in **Fig.1(2)** and goes out **Fig.1(3)** ) are different. This facilitates and anticipates air circulation and reduces considerably spraying time,working hours and energy consumption. The same result can be obtained even if the measurements of the conveyor's ends are the same, but it will take more time. Air circulation is created by a highly efficient compact helicoidal ventilator **Fig.1 (4)** with statically and dynamically balanced blades **Fig.1(5)** of different sizes depending on the area to be sprayed. Steel, a low friction metal, is used to facilitate air circulation. The whirling motion created by the fan (when activated Fig.1(6) ) stops close to the conveyor's centre where star-shaped sheets **Fig.1(7)** are attached.

These, then remove the rotating air flow caused by the fan and help the air to be expelled smoothly and regularly.

In the lower part of the conveyor there is a hollow space which serves as a "passage" for the fan's electric cable **Fig.1(9)**. The cable goes to the electric box where there is socket **Fig.1(10)** coming from the electric control panel **Fig.1(39)**. The nozzles **Fig.1 (11)** are situated in front of the machine and are fastened with small special rods **Fig.1(12)** which not only support the nozzles but also guide and sustain small pipes **Fig.1(30)** used for liquid suction and compressed air (B) until they come to the internal part of the mixer **Fig.1(14)** situated below them.

In order to use substances with different specific weights it is necessary to manually correct and control vaporization inside the nozzles **Fig.1(11)** in the initial phases of spraying. This can be obtained by means of srcew thread on the nozzle piston **Fig.4 (12,** showing nozzle),which manually regulates the nozzles, tightening it if a substance is more liquid or loosening it if a substance is denser. Finally,it is possible to regulate the crown wheel **Fig.4 (15**, showing nozzle). Nozzle regulation must be done at the beginning of spraying and requires approximately one minute. The machine is equipped with a frontally positioned mixer. Water, along with other substances are poured into an opening **Fig.1 (16-31)** which is on the cover of a tank with a conical base **Fig.1(15).** The mixing process takes places inside the mixer which consists of a tank and basin connected to eachother (the former being on the atomizer's lower front side and the latter on the atomizer's upper front side) in the following way:

The mixture of water with other substances (or mixture as it will be called from now on), is poured into the tank and by means of a " long stemmed" electric pump **Fig.1(17,18)** and a copper tube **Fig.1(19)** the mixture is then pushed from the tank with a conical base **Fig.1(15)** up into a small basin **Fig.1(20)** ( also with a conical base). Subsequently the mixture falls from the basin by means of a rubber tube **Fig.1(21)** and goes back into the tank below **Fig.1(15)** and so forth and so on. This procedure is made possible by the presence of 2 openings **Fig.1(40,41)** which allow both the drainage **Fig.1(21)** and loading **Fig.1(19)** pipes to pass.

The long-stemmed pump **Fig.1(17)** situated on the cover **Fig.1(22)** of the draught tank has a double function because of a "branch" **Fig.1(23).** On one hand, it takes the mixture from the tank through a copper tube **Fig.1(19)** up into the small basin **Fig.1(20).** On the other hand it brings the mixture into the draught tank (again through a copper tube -24 - ). A circular coil with openings located inside the base of the lower tank and covering the tank's entire circumference **Fig.1(25)** avoids mixture accumulation by pushing the mixture towards the centre of the tank with the conical base where the long-stemmed pump impeller is **Fig.1 (18).** This procedure then starts over again and guarantees smooth circulation and efficient blending of the mixture for the entire spraying procedure.

In the centre of the conical base of the draught tank there is an opening **Fig.1 (26)** for the blended mixture with 2 taps **Fig.1 (27-28).** One **Fig.1(28)** is used for washing and emptying the tank. The other **Fig.1(27),** which regulates opening and closing is necessary for manually activating spraying regulation. This tap **Fig.1(27)** is also important for the following reasons:
1) It helps avoid "mixture accumulation" which because of it's specific weight would immediately deposit after being poured into the tank and would obstruct pipes where the small liquid suction tubes are inserted (also where the nozzles tubes are) before the mixture is completely blended
2) It eliminates eventual obstruction of the nozzle tubes **Fig.1(30)** and consequently the possibility of nozzle clogging
3) It gives the pump enough time (about 1 minute) to blend the mixture well before being sucked up and sent through the nozzles
4) It activates or blocks (manually) spraying in any given situation.

In order to control both the quantity of mixture and correct "mixture blending" inside the tank a small transparent window **Fig.1(16-31),** which can be opened and closed, has been placed on the cover of the tank **Fig.1(22)** in which mixture blending occurs.

The mixer is cylindrical and completely made of steel, except for the pump which is made of valex (hard plastic),the pipes which are made of rubber **Fig.1 (32)** and the remaining part which is made of copper. A lid has been placed on the upper basin which functions as a cover. Electricity regulating the fan and the pump is conveyed to a box next to the mixer. Here, there is also a switch.

Air, coming from the compressor **Fig.1(35)** is conveyed to the nozzles by means of a branch **Fig.1(36),**regulating taps **Fig.1(38)** and a pressure guage **Fig.1(37)** placed on the mixer's side. When there is no more liquid in the draught tank **Fig.1(14),** the machine comes to a stop by means of a sensor for liquids **Fig.1(42)** placed inside the suction tube **Fig.1(29),** thus directly blocking the general switch of the control panel.

### 2) THE NOZZLES

Figures 3 and 4 show nozzle sections. The nozzles are placed on the extreme opposite side of the fan inside the conveyor. These vaporize the mixture with the aid of a common air compressor. The number of nozzles may vary depending on the size of the fan. Cleaning nozzles is simple. Nozzles can be taken apart into 2 pieces, thereby obtaining a piston **(Fig.3)** and a shell **(Fig.4)**. The piston has an opening with a net which measures 1/8 **Fig.4 (13).** This opening leads to an internal tube **Fig.4 (11)** (measuring 1,5 tenths) which functions as a passage for the mixture.

The back side of the piston has screw thread **Fig.4 (12)** which is necessary for regulating spraying according to what substances are used. Furthermore a counter-nut has been added for eventual regulation blocking **Fig.4 (15).** Thus, nozzles can be regulated manually by tightening the piston if the mixture is more liquid or loosening it if the mixture is denser. As mentioned earlier,screw thread **Fig.4 (12)** placed on the piston makes this regulation process possible. A ring OR **Fig.4 (16)** is shown in the piston **(Fig.4).** This is used to prevent air loss from the decompression chamber while regulating vaporization and the spraying procedure.

The shell has 2 threaded openings **Fig.3 (3-5)** which are necessary for attaching fixed rods to the machine. The back side of the nozzle has a conical shape **Fig.3 (8),Fig.4 (19)** in order not to obstruct air passage and thereby eliminate the problem of deviating air flow caused by the fan.

### 3) ELECTRIC PANEL

The electric panel is shown in Fig.2

In order to function automatically, the atomizer utilizes an electric panel for operation control and programming. The following 5 switches are situated on the electric panel:
1) A general switch and a door block **Fig.2 (1)**
2) A fan switch for automatic and manual control **Fig.2 (2)**
3) An air compressor switch for automatic and manual control **Fig.2 (3)**
4) An automatic and manual external safety light switch to be used in the sprayed environment **Fig.2 (4)**
5) An automatic and manual 24 V electric valve switch situated on the air opener compressor **Fig.2 (5)**

In addition to these 5 switches, the electric panel also has 3 timers for automating the following components of the atomizer **Fig.2 (6)**
- Electric valve air compressor **Fig.2 (6a)**
- A fan compressor **Fig. 2 (6b)**
- An external light to signal the end of danger and to indicate possible entrance into the sprayed area **Fig.2 (6c).**

In **Fig. 2, number 8,9,10 and 11** refer to the plugs which power the fan, the electric valve air compressor and the external safety light while numbers **12 and 13** refer to the power point of the principle feeding as well as the cable for the sensor which indicates that the spraying procedure has terminated. In any case all details concerning spraying procedure, the dimensions and the materials employed can vary without altering the principal characteristics of the automizer and it's functions. In fact, the atomizer can be constructed with any kind of material: steel, plastic, fibreglass etc...

## Claims

1. The fixed atomizer for pastes, powders and liquids allows rapid and efficient spraying by mixing water with any substance (pasty, powdery or liquid) of any specific weight in closed environments.

2. The fixed atomizer for pastes, powders and liquids according to claim 1) can be positioned on the side of a closed environment from which the whole spraying procedure may take place without the presence of a technician, thereby saving spraying time, cutting costs and avoiding exposure to highly toxic substances.

3. The fixed atomizer for paste, powders and liquids according to the previous claims, has a conveyor with a conical shape, which means the measurements of the conveyor's ends (where air comes in- **Fig.1 (2)** )- and goes out- **Fig. 1 (3) -** are different, thus facilitating and anticipating air circulation and thereby anticipating spraying with reductions in spraying time, working hours and energy consumption.

4. The fixed atomizer for pastes, powders and liquids according to the previous claims has a mixer which consists of a tank and a small basin connected to eachother; the former being on the atomizer's lower front side and the latter on the atomizer's upper front side.

5. The fixed atomizer for paste, powders and liquids according to the previous claims has a mixer with a small basin on it's upper front side. The shape of the small basin's base is conical - **Fig. 1 (20)**

6. The fixed atomizer for pastes, powders and liquids according to the previous claims has a mixer with a draught tank on it's lower front side. The shape of the draught tank's base is conical - **Fig. 1 (26)**

7. The fixed atomizer for pastes, powders and liquids according to previous claims has a long-stemmed pump situated on the cover of the mixer's draught tank. This pump by means of a pipe, pushes the mixture (water mixed with other substances) from the draught tank up into the small basin - **Fig.1 (20)**- then the mixture leaves the small basin and falls back into the lower draught tank and so forth and so on. In this way the first of the two phases of mixture blending takes place before actually starting the spraying procedure

8. The fixed atomizer for pastes, powders and liquids according to the previous claims has a long-stemmed pump situated on the draught tank's cover which by means of a pipe, leads the mixture (by pressure) out of the tank and into the circular coil located inside the draught tank's base and covering the tank's entire circumference - **Fig. 1 (24) -** thus carring out the second phase of mixture blending before starting the spraying procedure.

9. The fixed atomizer for pastes, powders and liquids according to the previous claims has a circular coil with openings - **Fig.1 (24)-** placed on the inside of the draught tank's conical base. This coil has the double function of preventing mixture accumulation in the tank and conveying unblended mixture towards the pump impeller located in the centre of the tank with the conical base.

10. The fixed atomizer for pastes, powders and liquids according to the previous claims has an outlet - **Fig. 1 (26)** -for the blended mixture on the conical base of the draught tank. There is also a tap - **Fig. 1 (28)** - on the conical base which is utilized for emptying the tank after spraying and before washing.

11. The fixed atomizer for pastes, powders and liquids according to the previous claims has an outlet - **Fig. 1 (26)** -for the blended mixture on the conical base of the draught tank. There is also a second tap - **Fig. 1(27)**-on the conical base which when activated manually prior to opening and spraying has the following functions:
• avoids mixture accumulation in the pipes (the nozzle pipes) - **Fig.1 (29)** where inevitably the mixture would deposit before being completely blended
• eliminates possible obstruction of the nozzles' suction pipes and consequently prevents nozzle clogging. It also gives the pump enough time (about a minute) to efficiently blend the mixture before being sucked up by the nozzles
• Finally, it activates or blocks the spraying procedure in any given situation.

12. The fixed atomizer for pastes, powders and liquids according to the previous claims has the possibility of spraying any substance (pasty, powdery as well as liquid) of any specific weight through the utilization of special nozzles which can be divided into 2 adjustable parts: the shell and the piston - **Fig.3-4-** by means of screw thread - **Fig 4 (12)** -. This is necessary for regulating vaporization at the beginning of the spraying procedure(it takes about 1 minute)and is obtained by tightening the piston - **Fig. 4-** if the mixture is more liquid or loosening it if the mixture is denser. The nozzle piston is also supplied with a counter-nut for blocking spraying regulation and also for preventing fan vibration from modifying spraying regulation.

13. The fixed atomizer for pastes, powders and liquids according to the previous claims has a nozzle piston equipped with a gasket commonly called ring OR or oring - **Fig. 4-16-** which is used to prevent loss of air pressure during spraying regulation and spraying procedure.

14. The fixed atomizer for pastes, powders and liquids according to the previous claims has a nozzle consisting of 2 parts: the shell- **Fig. 3 (8)** and the piston- **Fig.4 (19)-**which are both conically-shaped in order to prevent air flow deviations caused by the fan and thereby obtain highly efficient spraying.

15. The fixed atomizer for pastes, powders and liquids according to the previous claims has a draught tank with a cover on which there is a small transparent window - **Fig.1 (16-31)** used for controlling the quantity of mixture needed and correcting mixture blending.
